# EUROPEAN PATENT SPECIFICATION

(11) **EP 2 727 700 B1**
(45) Date of publication and mention of the grant of the patent: **30.03.2016**
(21) Application number: 13190737.0
(22) Date of filing: 29.10.2013
(51) Int. Cl.: B29L 31/24, B29L 31/26, B29L 23/18, B29C 45/26, F16L 25/00, B29C 45/28, B29C 45/14

(54) **Injection system for producing a bell joint at the axial end of a polyolefin-type plastic pipe**
Spritzgussensystem zur Herstellung einer Muffe an einem Ende eines Polyolefin-Rohres
Système d'injection pour fabriquer un embout femelle à l'extrémité d'un tube en polyoléfine

(30) Priority: 31.10.2012 IT RA20120023
(43) Date of publication of application: 07.05.2014
(73) Proprietor: IPM S.R.L., 48022 Lugo (Ravenna) (IT)
(72) Inventor: Argnani, Claudio, 48022 Lugo (Ravenna) (IT)
(74) Representative: Petruzziello, Aldo

(56) References cited:
- DE-A1-102006 006 055
- DE-U1- 9 111 628
- JP-A- S58 179 626
- US-A- 4 724 111
- US-A1- 2010 244 317

## Description

According to the current technology of plastic material piping, particularly for sewerage pipeline, water supply systems, drainage water, with a diameter generally between 200 and 1200 mm, a connection between two successive pipes is normally achieved with a so-called "bell and spigot joint", or "bell joint", this being the terminology used in the industry and in the applicable standards to describe the end of a pipe shaped like an external sleeve to connect, when forming a pipe line, to the standard end of the next length of pipe. The formation of bells is normally obtained by plastic deformation of a pipe end, previously heated to the correct temperature. However, this poses some problems in particular for corrugated pipes, as during the tapering operation the ribs are strained and more generally, polyolefin-type plastic materials (polypropylene and polyethylene) have a plastic memory which tends to cause the materials to revert to their original extrusion shape.

To solve these problems, a system has been devised according to which a bell joint is injected at the end of a pipe, coaxially and materially integral with it: several applications already exist in modern technology. In such regard mention can be made to Italian patent applications in the name of the current applicant, IPM srl, No. RA2011A00012 (EP 2505331) entitled: "Method of production of a joint for corrugated pipes in plastic material with annexed sealing gasket" and no. RA2010A00017 (EP 2390546) entitled: "Cut profile of the end of a double-walled corrugated pipe and method of and device for forming said profile".

The injection systems currently in use **(see e.g.** JP 56117513A **or** US 4724111**)** are characterised by the presence of a roughly vertical, radial injection channel, which injects the material into the mould laterally with respect to it and from the top: the material, on entering the mould internal space, is routed along two semi-circumferential strips, symmetrical with respect to the vertical axial plane, to be distributed along the two sides of the injector channel, thus gradually filling all the available volume: during the process, however, it will become progressively cooler creating inner stresses along the different circumferential sections of the product which, mainly during this described cooling phase, will tend to deform in a differential manner, losing the original circular shape of its cross-sections.

Also in the adhesion area between the pipe and injected joint stress is often produced for the same reason; additionally, pressure and temperature are different along the connecting circumferential strip, as they are higher in the areas reached earlier (presumably the top mould areas) and gradually lower in the remaining bottom areas; in this way, however, the conditions and quality of adhesion, mainly linked with the previously mentioned factors (pressure and temperature) are acceptable only in certain areas and not acceptable in others, according to adjustments made.
JP 558179626A discloses an injection moulding apparatus which uses a single annular injector 24 suitable for producing objects of small size, corresponding to the size of the injector.

As an annular injection is made, branched slanted channels are used for feeding the injector, not being possible a feed with a tubular channel.

An annular injection would be not practicable for forming a bell joint on a pipe which, inter alia, as said before, can reach a diameter of 1200 mm.

The aim of the present invention is to offer a solution to the observed problems affecting the quality of the injected joint and its adhesion to the pipe, providing an injection system as defined in independent claim 1. Preferred embodiments of the invention are disclosed in the dependent claims.

The invention proposes a multiple casting injection technique with multiple channels spaced out preferably at equal intervals on the circumferential face of the mould corresponding to the thickness of the free end of the bell joint, on the opposite side to the joint-to-pipe adhesion end; a system in which the injection flow trend is globally and individually oriented for each casting in the axial direction along the mould, over its whole length all the way to the adhesion area between the joint and pipe, and following the same route; in this way, all the areas along each one of the various joint circumferences are under the same pressure and temperature conditions, therefore, no internal stress is produced along such circumferences; the global shape of the joint is circular in each one of its cross-sections and therefore does not change.

Additionally, it is possible to ensure the same pressure and temperature conditions throughout the adhesion area: in particular, special adjustments can be made to ensure that the existing conditions are the ideal conditions to achieve satisfactory material adhesion.

Stress can only be observed in the joint along the axial direction, as a result of different pressure and temperature values at the free end of the joint, corresponding to the injection cross-section towards the pipe-to-joint adhesion area, with, however, negligible effects and without any influence on the shape of the radial cross-sections of the joint itself.

These and other characteristics and advantages of this invention will be specified in greater detail in the following description of an embodiment - illustrated by way of example only and by no way of limitation.

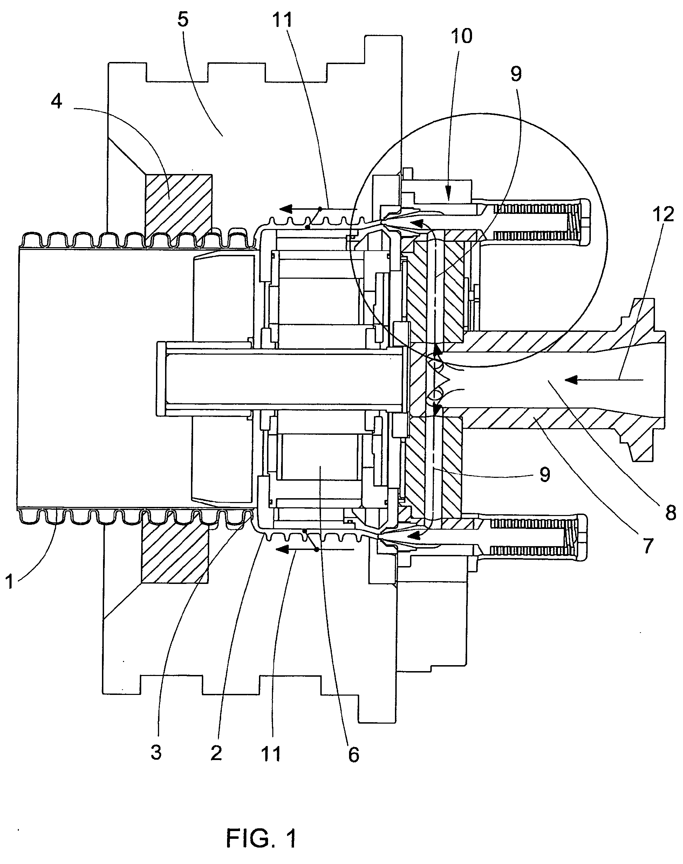

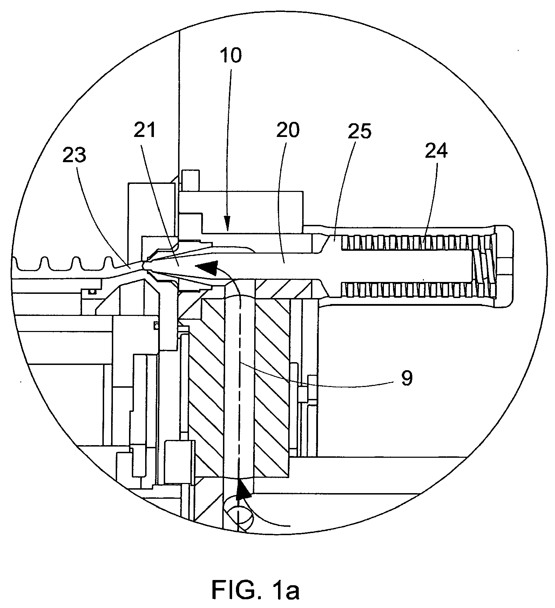

Fig. 1 is an axial section of the injection device, where only the components featured in the invention at issue are highlighted;
Fig la is an enlarged view of an injection nozzle encircled by the circle A in Fig. 1;

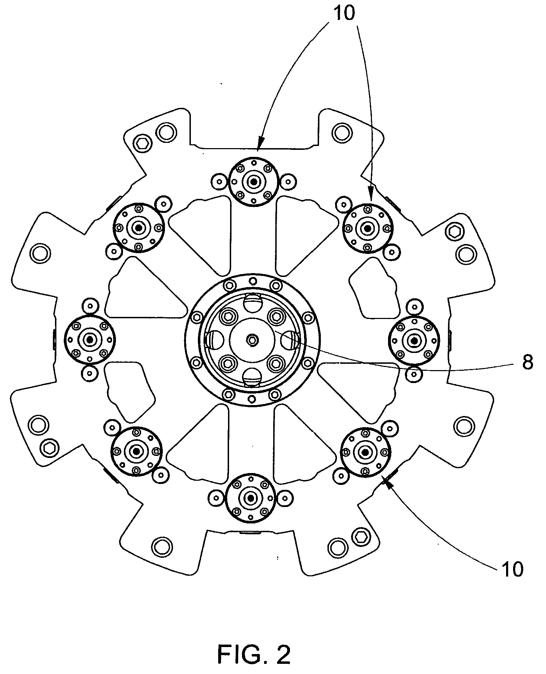

Fig. 2 is a schematic view from the right side of Fig. 1.

The axial end of the pipe (1), which in the drawing is a double-walled corrugated pipe, is rigidly locked during the injection operation by the mould sector (4); another mould sector (5) defines the external shape of the bell joint (2) to be injected, which is coaxial with the pipe (1) and has a shape and dimensions, particularly the inside diameter and length, suitable for acting as a joint between two successive pipes in the pipe line to be implemented.

The pipe (1) and the bell (2) adhere to one another, becoming sealed in the area (3), having a suitable width and shape to facilitate mutual material connection; this area (3) is extended in a continuous manner to the whole corresponding circumferential strip.

The bell injection moulding is completed by the inside part (6), mainly defining the bell joint inside diameter.

The injection device 7 then includes an axial central injection channel 8, in which the material flows in the direction of arrow 12, a number of equal radial channels 9, departing from the channel 8, inside which the material flows from the centre to the outside, leading into the injection nozzles 10, arranged at circumferential thickness level of the joint to be injected, on its free end face, and positioned in the direction of the pipe and joint axis, with a joint-to-pipe direction of injection.

Each injection nozzle 10 comprises a shutter stem 20 with a conical tip 21, held normally in occlusion of the corresponding injection hole 23 by a spring 24 acting on an annular flange 25 of such stem. During the injection, the material pressure acts on the **conical tip 21,** overcoming the force of the **spring 24,** such as to move the shutter 20 and open the injection hole 23. When the injection has been made, as there is no material pressure, the spring 24 returns the shutter 20 in the closing position of the corresponding hole 23.

These nozzles 10, all equal and arranged at equal intervals along the circumference to ensure a geometrical symmetry with respect to the pipe and joint axis, inject the material into the mould; this injected material is therefore under the same pressure and temperature conditions throughout the mould circumference, which makes it possible to set suitable values for completing the injection phase in an ideally efficient manner and to make sure that, in the subsequent cooling phase, no internal stress is created between different areas within the circumference due to different cooling rates and conditions.

From the nozzles 10 the injected fluid spreads to the inside of the mould in the virtually axial direction 11 along the joint generatrix until the junction area 3 between the injected joint 2 and pipe 1 is reached. As the flows of material occur in the same conditions (route length, configuration, resistance etc.) - the material initial conditions of pressure and temperature being the same - the final conditions will also be the same: as a result, homogeneous material conditions are also obtained for the whole connection-adhesion section. This enables to prevent the onset of internal stress and to adjust the pressure and temperature values so that they are suitable for enhancing adhesion between the pipe and bell joint in a consistent, ideally efficient manner.

The same material homogeneity conditions which help prevent the formation of stress also occur, for the same reason described here above, in all the injected joint standard cross-sections. Therefore, the joint can more easily retain its original shape without any local or generalised deformation (ovalisation).

Poor homogeneity in the material conditions can be detected to some extent along the axial direction 11, the possible effects of which are only minor variations of the overall length of the joint. However, these effects have no significant influence on functionality.

Bell joints created according to this invention can also be applied to smooth pipes with a plain cylindrical wall.

The number of injection nozzles, arranged along the circumferential surface corresponding to the bell thickness on the opposite end to the adhesion side, can vary according to bell diameter, i.e. according to the above mentioned circumferential development and other functional considerations aimed at effectively implementing the required product design. It should also be borne in mind that a high number of castings improves the homogeneity of the material parameters along the circumference, and that, however, financial and engineering considerations should also be part of the equation.

Except for the aspects claimed as part of the invention, the injection system is built according to standard criteria in a workmanlike manner.

## Claims

1. Injection system for producing a bell joint (2) at the axial end (3) of a pipe (1) made of polyolefin-type plastic material, coaxial with it and materially adhering by sealing to the same end (3) and precisely throughout its circumferential development, **characterised in that** it comprises a plurality of injection nozzles (10) located on the mould face opposite the axial end (3) of the pipe, corresponding to the joint thickness at its free end, and arranged all over the circumferential strip, positioned, in terms of material injection direction, in an axial direction (11) with respect to the pipe and bell and with an injection direction oriented from the joint (2) to the pipe (1), each of said plurality of injection nozzles (10) comprising a shutter stem (20) with a conical tip (21), held normally in occlusion of a corresponding injection hole (23) by a spring (24) acting on an annular flange (25) of such stem, in contrast to the action of the material to be injected.

2. The injection system according to claim 1, **characterised in that** the injection nozzles (10) are all at the same distance one from the other on the mould circumferential strip corresponding to the joint thickness at its free end.

3. The injection system, according to claim 1, **characterised in that** the number of injection nozzles (10) on the circumference is variable.

4. The injection system, according to claim 1, 2 or 3, **characterised in that** each injection nozzle (10) is fed from a radial injection channel (9), all the said radial channels (9) being globally fed from a single axial injection channel (8).

5. The injection system, according to claim 4, **characterised in that** all the injection nozzles (10) are equal and that all the injection channels (9) are also equal.

6. The injection system according to anyone of the previous claims, wherein said pipe (1) is a pipe for sewerage pipeline, water supply systems, drainage water, and has a diameter generally between 200 and 1200 mm.

7. The injection system according to anyone of the previous claims, wherein said pipe (1) is a corrugated or smooth pipe.

8. A method to make a pipe (1) having a bell joint (2), the method using the injection system according to any of claims 1-7

## Patentansprüche

1. Spritzsystem zur Herstellung einer Glockenmuffe (2) an dem axialen Ende (3) eines Rohrs (1), das aus Kunststoffmaterial vom Polyolefintyp hergestellt, coaxial damit ist und materiell durch Versiegeln an dasselbe Ende (3) und genau durch seine zirkumferenzielle Entwicklung anhaftet, **dadurch gekennzeichnet, dass** es eine Mehrzahl von Spritzdüsen (10) umfasst, die sich auf der Formoberfläche dem axialen Ende (3) des Rohrs gegenüber befinden und der Verbindungsdicke an seinem freien Ende entsprechen und über den gesamten zirkzmferentiellen Streifen angeordnet und mit Bezug auf die Materialeinspritzrichtung in einer axialen Richtung (11) mit Bezug auf das Rohr und die Muffe positioniert sind und wobei eine Spritzrichtung von der Verbindung (2) zum Rohr (1) orientiert ist, wobei jede der Mehrzahl von Spritzdüsen (10) eine Verschlussklappenstange (20) mit einer konischen Spitze (21) umfasst, die normalerweise in Verschlussposition eines entsprechenden Einspritzlochs (23) durch eine Feder (24) gehalten wird, die auf einen ringförmigen Flansch (25) einer derartigen Stange wirkt, im Gegensatz zur Wirkung des Materials, das eingespritzt werden soll.

2. Spritzsystem nach Anspruch 1, **dadurch gekennzeichnet, dass** die Spritzdüsen (10) sich alle in derselben Entfernung voneinander am Formumfangsstreifen befinden, der der Verbindungsdicke an ihrem freien Ende entspricht.

3. Spritzsystem nach Anspruch 1, **dadurch gekennzeichnet, dass** die Anzahl von Spritzdüsen (10) am Umfang variabel ist.

4. Spritzsystem nach Anspruch 1, 2 oder 3, **dadurch gekennzeichnet, dass** jede Spritzdüse (10) von einem radialen Einspritzkanal (9) beliefert wird, wobei alle radialen Kanäle (9) global von einem einzigen axialen Spritzkanal (8) aus beliefert werden.

5. Spritzsystem nach Anspruch 4, **dadurch gekennzeichnet, dass** alle Injektionsdüsen (10) gleich sind und dass alle Injektionskanäle (9) ebenfalls gleich sind.

6. Spritzsystem nach einem der vorhergehenden Ansprüche, wobei das Rohr (1) ein Rohr für eine Kanalisationsleitung, Wasserversorgungssysteme, Abwasser ist und einen Durchmesser von allgemein zwischen 200 und 1200 mm aufweist.

7. Spritzsystem nach einem der vorhergehenden Ansprüche, wobei das Rohr (1) ein Wellrohr oder ein glattes Rohr ist.

8. Verfahren für die Herstellung eines Rohrs (1), das eine Glockenmuffe (2) aufweist, wobei für das Verfahren das Spritzsystem nach einem der Ansprüche 1 - 7 verwendet wird.

## Revendications

1. Système d'injection pour produire un joint à emboîtement (2) au niveau de l'extrémité axiale (3) d'un tuyau (1) en plastique de type polyoléfine, coaxialement par rapport à celui-ci et adhérant matériellement par scellage à cette même extrémité (3) et précisément tout le long de son développement circonférentiel, **caractérisé en ce qu'**il comprend une pluralité de buses d'injection (10) situées sur la face du moule opposée à l'extrémité axiale (3) du tuyau, correspondant à l'épaisseur du joint au niveau de son extrémité libre, et agencées tout autour de la bande circonférentielle, positionné, en termes de direction d'injection de la matière, dans une direction axiale (11) par rapport au tuyau et à l'emboîtement et avec une direction d'injection orientée depuis le joint (2) jusqu'au tuyau (1), chacune de ladite pluralité de buses d'injection (10) comprenant une tige d'obturation (20) à pointe conique (21), maintenue normalement lors de l'occlusion d'un orifice d'injection correspondant (23) par un ressort (24) agissant sur une bride annulaire (25) de ladite tige, contrairement à l'action de la matière à injecter.

2. Système d'injection selon la revendication 1, **caractérisé en ce que** les buses d'injection (10) sont toutes à la même distance les unes des autres sur la bande circonférentielle du moule correspond à l'épaisseur du joint au niveau de son extrémité libre.

3. Système d'injection selon la revendication 1, **caractérisé en ce que** le nombre de buses d'injection (10) sur la circonférence est variable.

4. Système d'injection selon la revendication 1, 2 ou 3, **caractérisé en ce que** chaque buse d'injection (10) est alimentée par un canal d'injection radial (9), tous lesdits canaux radiaux (9) étant globalement alimentés par un seul canal d'injection axial (8).

5. Système d'injection selon la revendication 4, **caractérisé en ce que** toutes les buses d'injection (10) sont identiques et tous les canaux d'injection (9) sont également identiques.

6. Système d'injection selon l'une quelconque des revendications précédentes, dans lequel ledit tuyau (1) est un tuyau de canalisation d'égout, de réseaux d'alimentation en eau, d'eau d'évacuation ; et a un diamètre généralement compris entre 200 et 1 200 mm.

7. Système d'injection selon l'une quelconque des revendications précédentes, dans lequel ledit tuyau (1) est un tuyau ondulé ou lisse.

8. Procédé de production d'un tuyau (1) ayant un joint à emboîtement (2), le procédé utilisant le système d'injection selon l'une quelconque des revendications 1 à 7.
